# EUROPEAN PATENT APPLICATION

(11) **EP 2 706 437 A2**
(43) Date of publication of application: **12.03.2014**
(21) Application number: 13180944.4
(22) Date of filing: 20.08.2013
(51) Int. Cl.: G06F 3/03

(54) **Display device**

(30) Priority: 20.08.2012 KR 20120090728
(71) Applicant: Samsung Electronics Co., Ltd, Gyeonggi-do 443-742 (KR)
(72) Inventor: Choi, Jeong-Seok, 443-742 Gyeonggi-do (KR); Yun, In-kuk, 443-742 Gyeonggi-do (KR); Lee, Jeong-Seok, 443-742 Gyeonggi-do (KR)
(74) Representative: Grünecker, Kinkeldey, Stockmair & Schwanhäusser

(57) **Abstract**

A display device including a pattern includes a plurality of color filters corresponding to one or more subpixels forming pixels of the display device, and a black matrix formed between the plurality of color filters, wherein the one or more subpixels include one or more marks representing absolute positions of the respective pixels of the display device, and each of the subpixels includes symmetric marks at a left side and a right side of the subpixel. Accordingly, the quantity of light emitted from each of Red, Green, and Blue subpixels is uniform, and the generated pattern has marks that are positioned where the pattern noise is minimized, is provided, thereby providing an improved image quality display device.

## Description

### BACKGROUND OF THE INVENTION

### 1. Field of the Invention

The present invention relates generally to a display device, and more particularly, to a display device including a pattern.

### 2. Description of the Related Art

Various display devices have been developed as a bi-directional entertainment device capable of performing communication with a user beyond the existing display of contents. Accordingly, many display devices, which recognize a corresponding input when a user directly touches a display screen or performs an operation corresponding to the touch with a finger gesture or by using a touch pen, have been developed.

### SUMMARY OF THE INVENTION

In accordance with an aspect of the present invention, an input scheme in a display device includes sensing a position on a display screen by pattern recognition and performing an input according to the position. The scheme using the pattern recognition is an input scheme of recognizing a pattern, which is formed on a display by using an input device (hereinafter, an electronic pen) including a camera, detecting a position of the electronic pen by using the recognized pattern, and performing an input through a value of the detected position. The input scheme includes photographing a display formed on an area indicated by the electronic pen by using the camera photographing a direction of a pen point of the electronic pen, detecting an appointed pattern from the photographed image, and recognizing a position or a command indicated by the electronic pen.

The scheme using the pattern recognition involves one or more marks being included in positions within subpixel areas, such as R, G, and B (Red, Green and Blue), of a display, so that a pattern is displayed representing information on the corresponding position. The electronic pen, such as a Pattern Recognition PEN (PR PEN), photographs a pattern at a position on a display, and recognizes the corresponding position on a displ ay panel through an analysis of an image of the photographed pattern.

However, when the mark is present in each subpixel as described above, the pattern generates a pattern noise due to the marks, and the pattern noise causes non-uniform display device quality.

That is, light with R, G, and B components emitted from the respective subpixels of the display device is recognized through a person's eyes. Since the mark is included in each subpixel, a quantity of light emitted from the subpixel is different according to an angle at which a user views the display device screen, causing the user to experience a non-uniform quality of the display device.

Accordingly, an aspect of the present invention is to provide a display device including a pattern causing minimal pattern noise generated due to the pattern with marks.

Another aspect of the present invention is to provide a display device including a pattern capable of decreasing deterioration of an image quality by causing a uniform quantity of light to be emitted from subpixels.

In accordance with an aspect of the present invention, a display device including a pattern includes a plurality of color filters corresponding to one or more subpixels forming pixels of the display device, and a black matrix formed between the plurality of color filters, wherein the one or more subpixels include one or more marks representing absolute positions of the respective pixels of the display device, and each of the one or more subpixels includes symmetric marks at a left side and a right side of the subpixel.

In accordance with another aspect of the present invention, a display device including a pattern includes a plurality of color filters corresponding to one or more subpixels forming pixels of the display device, and a black matrix formed between the plurality of color filters, wherein the one or more subpixels include one or more lines representing absolute positions of the respective pixels of the display device, and each of the one or more subpixel includes symmetric lines at an upper side and a lower side of the subpixel.

### BRIEF DESCRIPTION OF THE DRAWINGS

The above and other aspects, features, and advantages of the present invention will be more apparent from the following detailed description taken in conjunction with the accompanying drawings, in which:
FIG. 1 illustrates a display device according to an embodiment of the present invention;
FIG. 2 illustrates a display device including a pattern according to an embodiment of the present invention;
FIG. 3 illustrates a case where light is emitted from a subpixel corresponding to green among subpixels of the display device according to an embodiment of the present invention;
FIG. 4 illustrates a case where the display device is viewed in upward, downward, left, and right directions based on a front direction of a display panel according to an embodiment of the present invention;
FIGS. 5A to 5C illustrate intensities of light emitted from subpixels according to a mark arrangement position within the subpixels according to an embodiment of the present invention;
FIG. 6 illustrates a pattern noise phenomenon according to an embodiment of the present invention;
FIG. 7 is a cross-sectional view of a liquid crystal panel of the display device according to an embodiment of the present invention;
FIGs. 8A to 8C illustrate an example of a mark arrangement within a subpixel according to an embodiment of the present invention;
FIG. 9 illustrates an example of a mark arrangement of a 2 mark type according to a first embodiment of the present invention;
FIG. 10 illustrates an example of a mark arrangement of a modified 2 mark type according to a second embodiment of the present invention;
FIG. 11 illustrates an example of a mark arrangement of a two-line type according to a third embodiment of the present invention;
FIG. 12 illustrates an example of a mark arrangement of a 4 mark type according to a fourth embodiment of the present invention;
FIG. 13 illustrates an example of a mark arrangement of a modified 4 mark type according to a fifth embodiment of the present invention;
FIG. 14 illustrates subpixels divided into an upper portion and a lower portion according to the embodiment of the present invention;
FIG. 15 illustrates an example of a mark arrangement of a 2 mark type in subpixels divided into upper portions and lower portions according to a sixth embodiment of the present invention;
FIG. 16 illustrates an example of a mark arrangement of a 2 mark type in subpixels divided into upper portions and lower portions according to a seventh embodiment of the present invention;
FIG. 17 illustrates an example of a mark arrangement of a 2 line type in subpixels divided into upper portions and lower portions according to an eighth embodiment of the present invention;
FIG. 18 illustrates an example of a mark arrangement of a 4 mark type in subpixels divided into upper portions and lower portions according to a ninth embodiment of the present invention; and
FIG. 19 illustrates an example of a mark arrangement of a modified 4 mark type in lower portions in subpixels divided into upper portions and lower portions according to a tenth embodiment of the present invention.

### DETAILED DESCRIPTION OF EMBODIMENTS OF THE PRESENT INVENTION

Hereinafter, embodiments of the present invention will be described with reference to the accompanying drawings. In the following description, a detailed description of known functions and configurations incorporated herein will be omitted for the sake of clarity and conciseness. Certain definitions found in the following description are provided only to help general understanding of the present invention, and it is apparent to those skilled in the art that the present invention can be implemented without such definitions. Therefore, the definitions thereof should be made based on the contents reflecting the entire description of the present specification.

The present invention provides a display device including a pattern indicating a position on a display panel, in which the quantity of light emitted from each of R, G, and B subpixels is uniform and a pattern noise is small, compared to a display device including a general pattern.

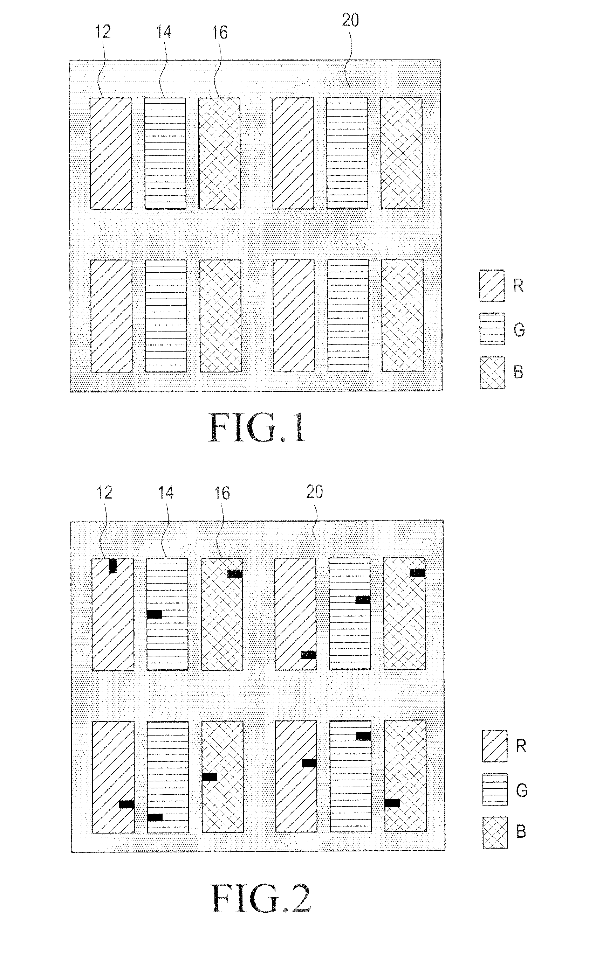

FIG. 1 illustrates a display device according to an embodiment of the present invention, and FIG. 2 illustrates the display device including a pattern according to an embodiment of the present invention.

Referring to FIG. 1, the display device may include a display panel, such as a Liquid Crystal Display (LCD) panel, and may be configured with subpixels 12, 14, and 16 corresponding to R, G, and B, respectively, and a black matrix 20. Referring to FIG. 2, the display device may include a pattern by including one or more marks at a specific position inside the subpixel so that a pattern appears for determining a position of a pixel by using the subpixels 12, 14, and 16, and the black matrix 20. In this case, the mark is a form in which a black matrix area is inserted inside a subpixel area of each of R, B, and B, and may be formed of the same material as that of the black matrix area. The mark may be formed of another material, which may appear as a pattern in R, G and B areas, and may be disposed at another position. One or more marks formed so that a pattern is generated may be formed at a position representing coordinates corresponding to a position of a pixel. The mark may have various shapes, such as a square and a rectangular shape, and a size of the mark may be changed according to a display panel and a usage of an electronic pen.

That is, one or more marks are for the purpose of representing coordinates of a pixel position, and are shown in a pattern form on the display panel. An electronic pen (not shown), such as a PR PEN photographs a pattern on the display panel illustrated in FIG. 2, and recognizes a unique position on the display panel by analyzing an image of the photographed pattern.

However, the pattern made by the mark, which is formed of the same component as that of the black matrix, is an area from which light is not emitted. Accordingly, the mark between the subpixels emitting light may be viewed as a black point, so that a pattern noise is generated due to the marks. The pattern noise causes a non-uniform image quality of the display device. That is, a user sees light with the R, G, and B components emitted from the respective subpixels of the display device, and the mark is included in each subpixel area, so that the amount of light emitted from the subpixels is different according to an angle at which the user views the screen of the display device.

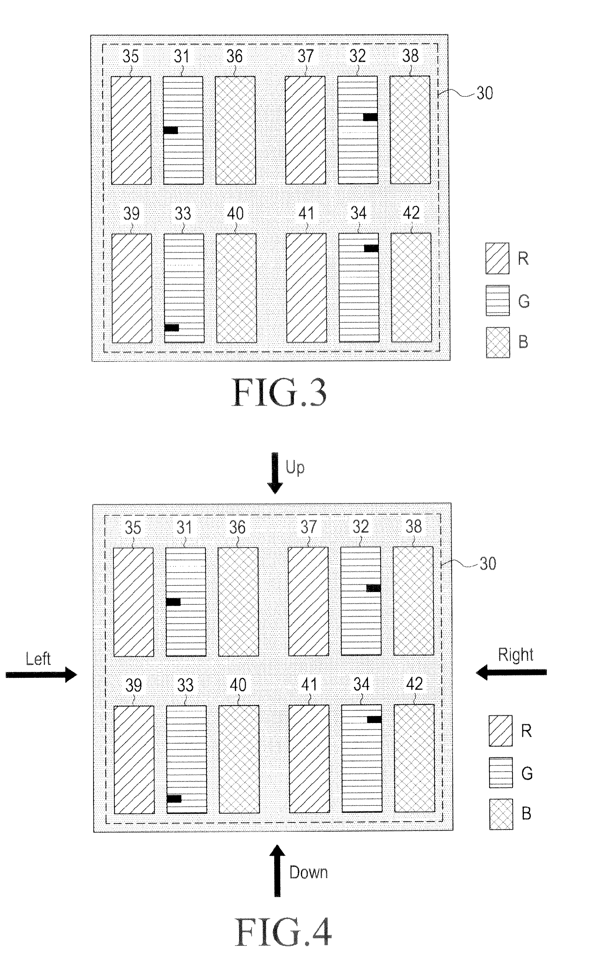

FIG. 3 illustrates a case where light is emitted from a subpixel corresponding to green among subpixels of the display device according to an embodiment of the present invention. Referring to FIG. 3, in the display device, a pixel(30) representing a specific position such as coordinates(X, Y), on the display panel displays green, and light may be emitted from first to fourth subpixels 31, 32, 33, and 34 with a G component among subpixels(31 ∼ 42) included in the pixel(30) Corresponding to the coordinates(X, Y). However, when the marks are included in the subpixels 31, 32, 33, and 34 with the G component, respectively, as illustrated in FIG. 3, a pattern noise may be generated due to the pattern with the marks.

The pattern noise may be generated in various forms depending on a position of the marks included in the first to fourth subpixels 31, 32, 33, and 34 of FIG. 3, and a viewing angle of a user at which the user views the display panel. For example, the pattern noise may or may not be viewed according to an angle at which the user views the screen of the display device, and the pattern noise, which is viewed at a specific angle, may not be viewed when the angle is changed by the marks included in the first to fourth subpixels 31, 32, 33, and 34.

FIG. 4 illustrates a case where the display device is viewed in upward, downward, left, and right directions based on a front direction of the display panel according to an embodiment of the present invention.

Referring to FIG. 4, when the user views the display panel in a left direction, the mark of subpixel 31 is disposed in a left-center portion of subpixel 31, and the mark of subpixel 32 is disposed in a right-center portion of subpixel 32, so that the user recognizes subpixel 32 brighter than subpixel 31. The mark of subpixel 33 is disposed in a left-bottom portion of subpixel 33, and the mark of subpixel 34 is disposed in a left-top portion of subpixel 34, so that the user recognizes subpixel 33 brighter than subpixel 34. Accordingly, when the user views the display panel in the left direction, subpixel 31 and subpixel 33 are recognized darker than subpixel 32 and subpixel 34, and the user experiences the pattern noise on the screen of the display panel, such as dark sports or black points, due to a difference of the brightness recognition. The pattern noise may be generated in various forms, such as a straight line pattern, an oblique line pattern, dark points, and spots, according to the position of the marks and an angle at which the user views the display panel.

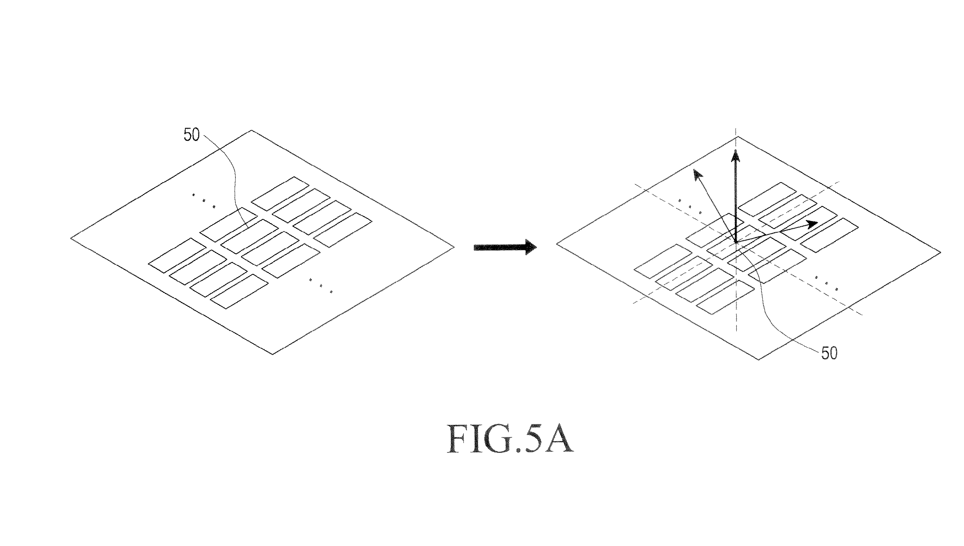

FIGs. 5A to 5C illustrate intensities of light emitted from subpixels according to a mark arrangement position within the subpixels according to an embodiment of the present invention.

FIG. 5A illustrates an intensity of light emitted from a subpixel 50 not including a mark. When the mark is not included in subpixel 50, the light emitted from subpixel 50 is emitted to the front surface, the intensity of the light is the greatest in the front surface which is perpendicular to the display panel, and the intensities of the light at the left side and the right side are identical.

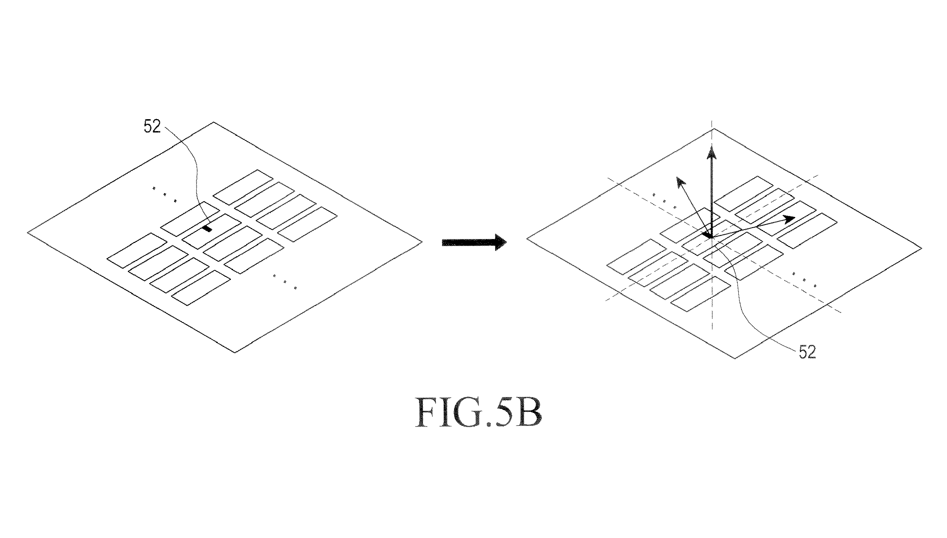

FIG. 5B illustrates an intensity of light emitted from a subpixel 52 when a mark is included in a left side of the subpixel. When the mark is included in the left side of subpixel 52, the light emitted from the subpixel has the greatest intensity in the front surface which is perpendicular to the display panel, and the light is not emitted in a mark area at the left side, so that the intensity of the light at the left side is smaller than that at the right side.

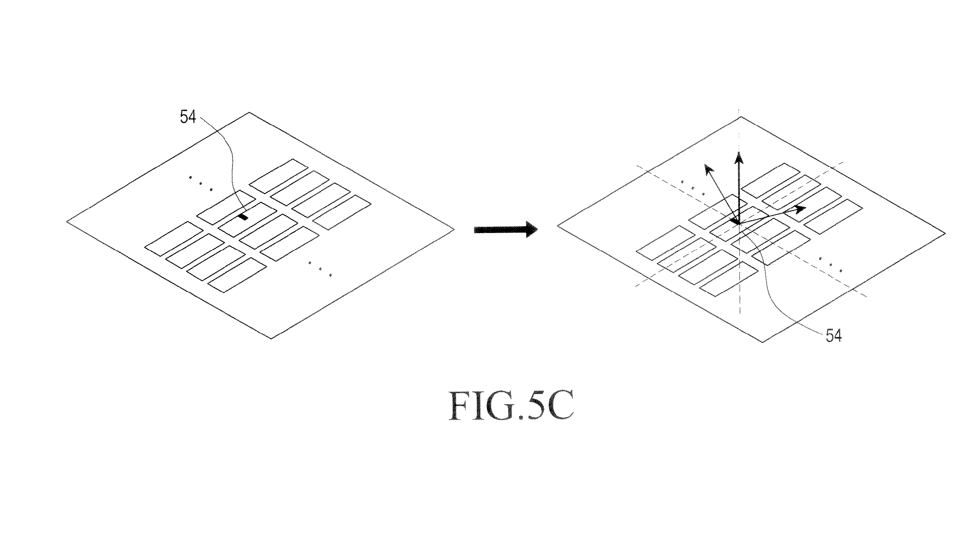

FIG. 5C illustrates an intensity of light emitted from a subpixel 54 when a mark is included in a right side of the subpixel. When the mark is included in the right side of subpixel 54, the light emitted from the subpixel has the greatest intensity in the front surface which is perpendicular to the display panel, and the light is not emitted in a mark area at the right side, so that the intensity of the light at the right side is smaller than that at the left side.

Although not illustrated in the drawings, when the mark is included in an upper portion within the subpixel, the intensity of the light in the upper portion is smaller than that in a lower portion, and when the mark is included in the lower portion within the subpixel, the intensity of the light in the lower portion is smaller than that in the upper portion.

Accordingly, due to a difference of the light emitted from the subpixel by the aforementioned mark, when the user views the display panel including the pattern using the mark, the user experiences a deterioration of the display screen image quality due to the pattern noise depending on an angle at which the user views the display panel.

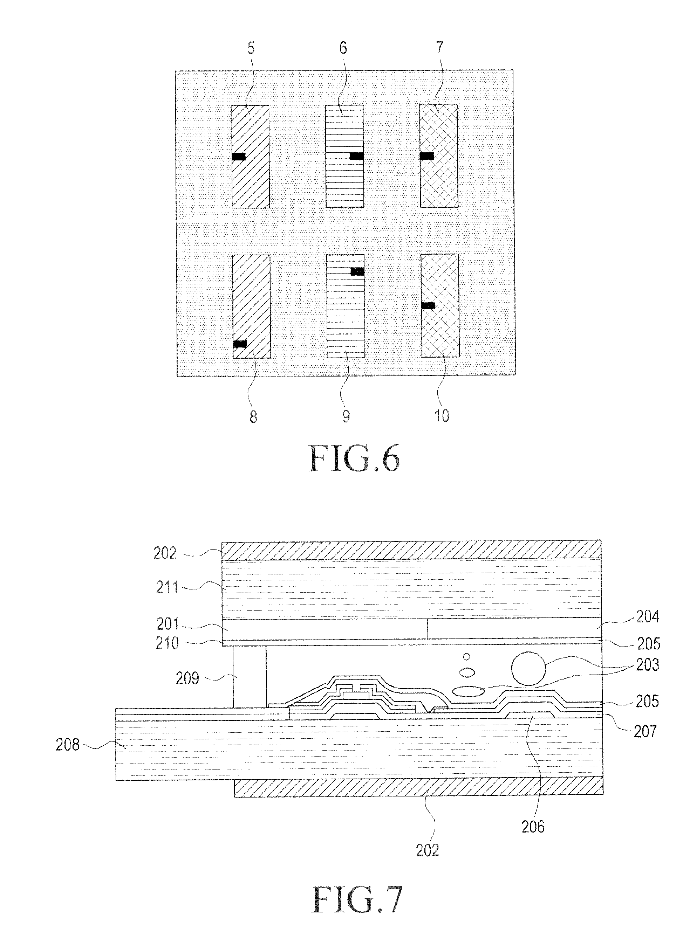

FIG. 6 illustrates a pattern noise phenomenon according to the embodiment of the present invention. In FIG. 6, the pattern noise phenomenon will be described based on fifth to tenth subpixels 5, 6, 7, 8, 9, and 10 of a green color including the marks, as an example. Referring to FIG. 6, the noise with various patterns may be generated according to the position of the mark within the subpixel and a direction in which the user views the display panel. Table 1 below represents a pattern noise form generated depending on a direction in which the user views the display panel.

**Table 1**

| Direction of view | | Darkly viewed subpixel, | Brightly viewed subpixel | Pattern noise form |
|---|---|---|---|---|
| Left view | When subpixels are viewed from the left side based on a front surface of the display panel | 5,7,8, 10 | 6,9 | Two-line dark vertical line pattern at both sides |
| Right view | When subpixels are viewed from the right side based on a front surface of the display panel | 6, 9 | 5, 7, 8, 10 | Dark vertical line pattern at the center |
| Upper view | When subpixels are viewed from the upper side based on a front surface of the display panel | 9 | 5, 6, 7, 8, 10 | Dark point [dark point in the ninth subpixel] |
| Lower view | When subpixels are viewed from the lower side based on a front surface of the display panel | 5, 6, 7, 8, 10 | 9 | Dark spot pattern [dark spots in the remaining subpixels except for the ninth subpixel] |

Referring to FIG. 6 and Table 1, the marks of the fifth subpixel 5, the seventh subpixel 7, the eighth subpixel 8, and the tenth subpixel 10 are formed at the left sides, and the marks of the sixth subpixel 6 and the ninth subpixel 9 are formed at the right sides, so that when the user views the fifth to tenth subpixels 5, 6, 7, 8, 9, and 10 from the left side based on the front surface of the display panel, the light emitted from the fifth subpixel 5, the seventh subpixel 7, the eighth subpixel 8, and the tenth subpixel 10 is viewed to be relatively darker than the light emitted from the sixth subpixel 6 and the ninth subpixel 9. Thus, a dark vertical line pattern is generated at the left side based on the sixth subpixel 6 and the ninth subpixel 9 due to darkness of the fifth subpixel 5 and the eighth subpixel 8, and a dark vertical line pattern is generated at the right side due to darkness of the seventh subpixel 7 and the tenth subpixel 10. That is, the pattern noise generating the dark vertical line pattern at both sides based on the sixth subpixel 6 and the ninth subpixel 9 is generated.

In contrast, when the user views the fifth to tenth subpixels 5, 6, 7, 8, 9, and 10 from the right side based on the front surface of the display panel, the light emitted from the seventh subpixel 6 and the ninth subpixel 9 is viewed to be darker than the light emitted from the fifth subpixel 5, the seventh subpixel 7, the eighth subpixel 8, and the tenth subpixel 10. Accordingly, the pattern noise generating the dark vertical line pattern at the center is generated due to darkness of the sixth subpixel 6 and the ninth subpixel 9.

The mark of the ninth subpixel 9 is formed at the upper side and the marks of the fifth subpixel 5, the sixth subpixel 6, the seventh subpixel 7, the eights subpixel 8, and the tenth subpixel 10 are formed in the relatively lower side, so that when the user views the fifth to tenth subpixels 5, 6, 7, 8, 9, and 10 from the upper side based on the front surface of the display panel, the light emitted from the ninth subpixel 9 is viewed to be darker than the light emitted from the fifth subpixel 5, the sixth subpixel 6, the seventh subpixel 7, the eights subpixel 8, and the tenth subpixel 10. Accordingly, the pattern noise generating a dark point in the ninth subpixel 9 is generated.

In contrast, when the user views the fifth to tenth subpixels 5, 6, 7, 8, 9, and 10 from the lower side based on the front surface of the display panel, the light emitted from the ninth subpixel 9 is viewed to be brighter than the light emitted from the fifth subpixel 5, the sixth subpixel 6, the seventh subpixel 7, the eighth subpixel 8, and the tenth subpixel 10. Accordingly, since only the ninth subpixel is bright, the pattern noise generating dark spots in the remaining subpixels, except for the ninth subpixel 9, is generated.

Thus, it is evident that the pattern noises are generated due to the positions of the marks formed in the subpixels. Accordingly, when the position of the mark is adjusted so that the brightness of the light of the subpixels is not different even though the user views the display panel in any direction among the upward, downward, left, and right directions, it is possible to prevent the image quality from deteriorating due to the generation of the pattern noise.

Accordingly, the present invention discloses the display device including the pattern having one or more marks at the position at which the pattern noise is minimally generated when the display panel is viewed in the upward, downward, left, and right directions. That is, when the mark is included in any one portion among the upper side, the lower side, the left side, and the right side of the subpixel, the intensity of the light is decreased in the direction in which the mark is included, so that a symmetric mark is included in the subpixel in an opposite direction of the mark included in any one portion among the upper side, the lower side, the left side, and the right side of the subpixel in order to decrease a brightness difference when the display panel is viewed from the upward, downward, left, and right directions.

FIG. 7 is a cross-sectional view of a liquid crystal panel of the display device according to an embodiment of the present invention. Referring to FIG. 7, in the liquid crystal panel, a front polarizing plate 202 is positioned on a front surface, a color filter substrate 211 is positioned under the front polarizing plate 202, and a black matrix 201 and a color filter 204 are positioned under the color filter substrate 211. A Thin Film Transistor (TFT) substrate is present under the black matrix 201 and the color filter 204.

As illustrated in FIG 7, the TFT substrate is formed in such a manner that a common electrode (ITO) 210 and a pixel electrode (ITO) 207 are positioned on a TFT-Array substrate 208, and two alignment layers 205 and a spacer 203 between the common electrode 210 and the pixel electrode 207, a Capacitance Storage (CS) 206, and a sealant 209 are included. A rear polarizing plate 202 is positioned under the TFT-array substrate 208.

The black matrix 201 representing a boundary between the color filters 204 includes a material or a structure capable of absorbing a light source or a material or a structure selectively reflecting the light source. When a light source of the electronic pen generates the IR, the black matrix 201 may be formed of carbon black which is an IR absorber. The color filter 204 may include an R (Red) color filter, a G (Green) color filter, and a B (Blue) color filter. The R, G, and B color filters may correspond to the subpixels, respectively, and a set of the R, G, and B color filters may correspond to one pixel.

The mark, which is formed in such a manner that the black matrix 201 area is inserted and included in each of the R, G, and B subpixel areas, may be formed of the same material as that of the black matrix area. Alternatively, the mark may be formed of another material recognizable as a pattern in the R, G, and B areas, and may be disposed at another position.

According to the present invention, a mark symmetric to the mark included in any one portion among the upper side, the lower side, the left side, and the right side is included in order to decrease a brightness difference when the display panel is viewed from the upward, downward, left, and right directions.

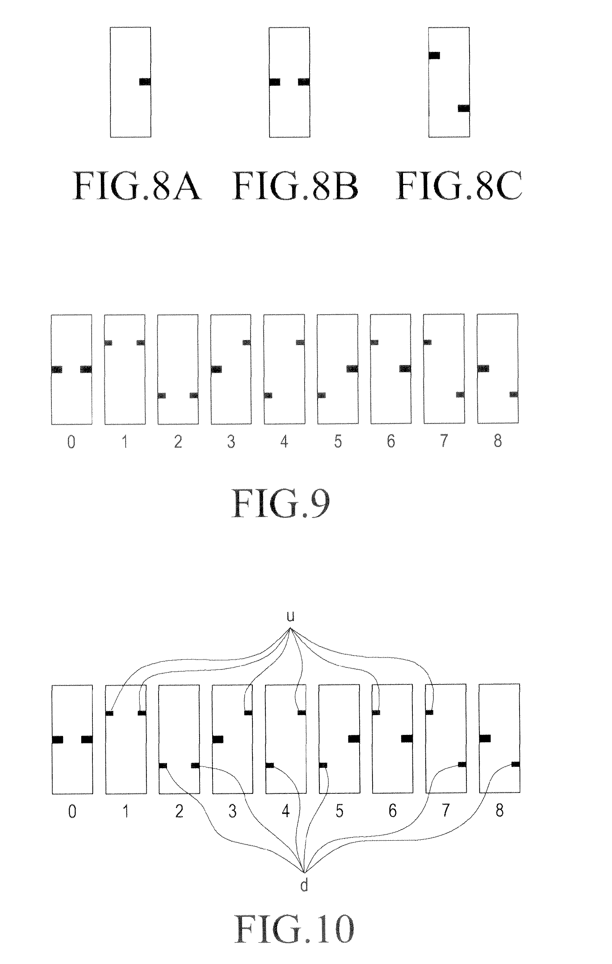

FIGs. 8A to 8C illustrate an example of a mark arrangement within a subpixel according to the embodiment of the present invention. One mark is included in any one of the left side and the right side within a subpixel as illustrated in FIG. 8A in the related art, but according to an embodiment of the present invention, two symmetric marks are included in the left side and the right side of the subpixel as illustrated in FIGs. 8B and 8C. In the present specification, a type of inserting the two symmetric marks in the left side and the right side of the subpixels is referred to as a 2 mark type.

When three marks are present at the upper side, the center side, and the lower side of each of the left side and the right side of the subpixel, the example of the arrangement of the marks by the 2 mark type according to the first embodiment of the present invention may include 9 cases.

FIG. 9 illustrates an example of a mark arrangement of the 2 mark type according to the first embodiment of the present invention. Referring to FIG. 9, when the marks are formed at three points, such as the upper side, the center, and the lower side, of each of the left side and the right side, the marks may be arranged in each subpixel in any one type among types 0 to 8. However, in the mark arrangement type of the 2 mark type of FIG. 9, the left side is only symmetric to the right side, and the upper side is not symmetric to the lower side, so that a brightness difference may be present between the upper side and the lower side.

In order to decrease the brightness difference between the upper side and the lower side, a second embodiment of the present invention provides a modified 2 mark type, in which the two symmetric marks are included in the left side and the right side in such a manner that the marks positioned at the upper side and the lower side are formed to be smaller than the mark positioned at the center.

FIG. 10 illustrates an example of a mark arrangement of a modified 2 mark type according to the second embodiment of the present invention. Referring to FIG. 10, when the marks are positioned at the upper sides like reference numeral u, the marks are formed to have a smaller size than those of the marks positioned at the center when the marks are positioned at the lower side in the manner of reference numeral d. This decreases the brightness difference due to the mark between the upper side and the lower side, so that the pattern noise may be decreased.

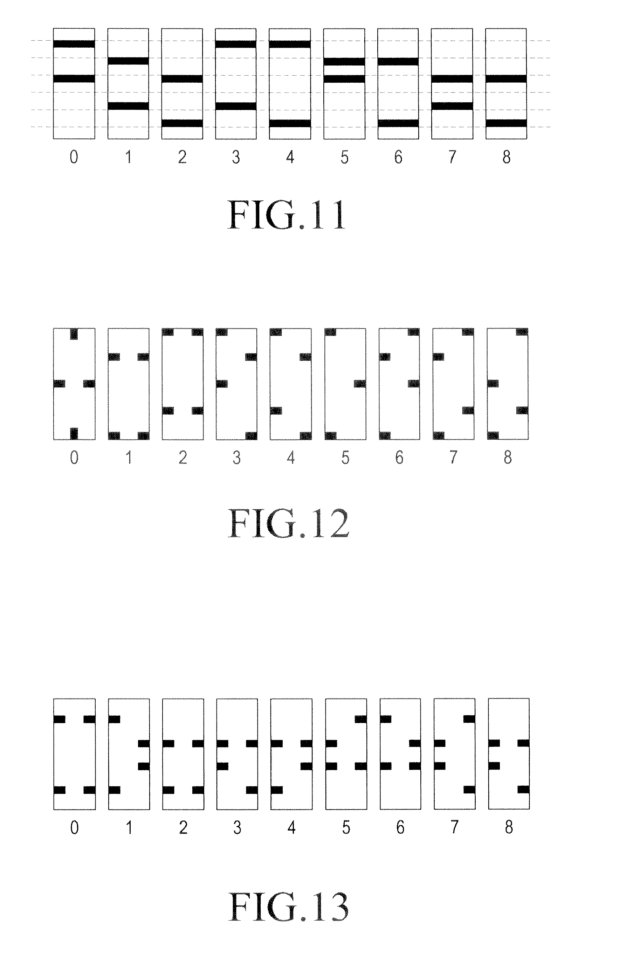

FIG. 11 illustrates an example of a mark arrangement of a 2 line type according to a third embodiment of the present invention. Referring to FIG. 11, 6 horizontal lines may be included within the subpixel. In the line type, the mark is not included in any one side between the left side and the right side, but the mark is connected in a line from the left side to the right side, so that there is no brightness difference between the left side and the right side. In the third embodiment of the present invention, in order to decrease the brightness difference between the upper side and the lower side, the two lines are included in the upper side and the lower side within one subpixel.

FIG. 12 illustrates an example of a mark arrangement of a 4 mark type according to the fourth embodiment of the present invention. Referring to FIG. 12, two symmetric marks are included in the left side and the right side, and two symmetric marks are included in the upper side and the lower side, so that the four marks are included in the upper, lower, left, and right sides, respectively, in a manner referred to herein as the 4 mark type. According to the 4 mark type, it is possible to decrease a brightness difference between the left side and the right side, and also decrease a brightness difference between the upper side and the lower side.

FIG. 13 illustrates an example of a mark arrangement of a modified 4 mark type according to a fifth embodiment of the present invention. Referring to FIG. 13, similar to FIG. 12, two symmetric marks are included in the left side and the right side, and two symmetric marks are included in the upper side and the lower side, so that the four marks are included in the upper, lower, left, and right sides, respectively, in such a manner that the positions of the marks may be modified in any degree.

In the first to fifth embodiments, the arrangement of the marks when a color is displayed by using the entirety of the single subpixel has been described, but the present invention may be applied to when a color is displayed by dividing one subpixel into an upper portion and a lower portion.

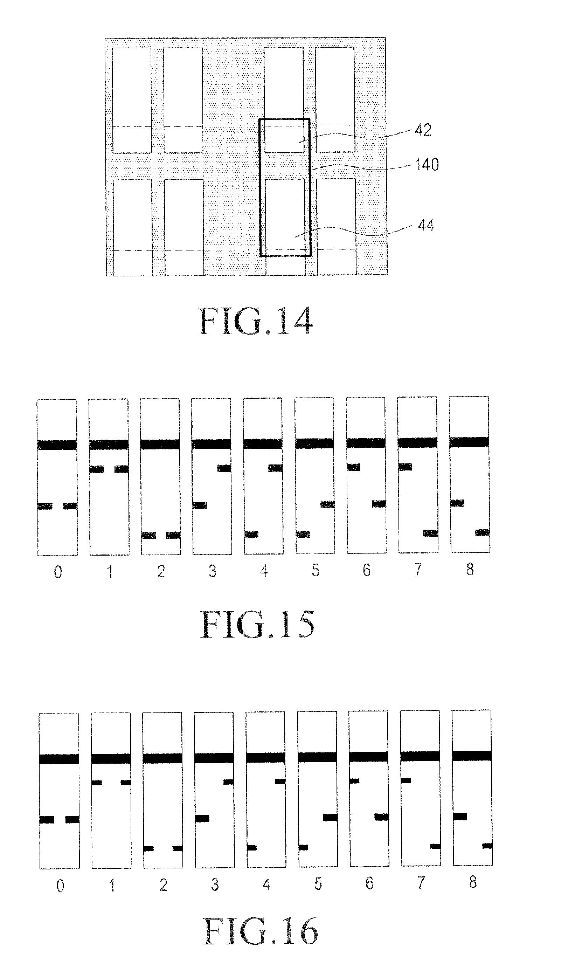

FIG. 14 illustrates subpixels divided into an upper portion and a lower portion according to an embodiment of the present invention. Referring to FIG. 14, the display panel may include a subpixel that is divided into an upper portion and a lower portion in the manner of reference numeral 140. In this case, the subpixel may be divided according to a ratio. Reference numeral 42 corresponds to the upper portion of the subpixel, and reference numeral 44 corresponds to the lower portion of the subpixel. The upper portion 42 and the lower portion 44 may display different color ranges, respectively. For example, when the subpixel has the red component, the upper portion 42 is used for displaying a color range between 1 to 150 among 1 to 255 which is the total color range of the red component, and the lower portion 44 is used for displaying the color range between 151 to 255. That is, when the color range between 0 to 150 is displayed, only the upper portion 42 is used, and when the color range between 151 to 255 is displayed, only the lower portion 44 is used.

When the display device includes the subpixel divided into the upper portion 42 and the lower portion 44 as described above, the mark is preferably included in the lower portion 44 because the lower portion 44 is used much less than the upper portion 42 is used, so that the number of cases where the mark exerts an influence on light is much less, and the upper portion 42 displays a relatively darker color than the lower portion, and a relative light difference according to the position of the mark becomes severe when the dark color is displayed, compared to when the bright color is displayed, so that the pattern noise is more severely generated.

FIG. 15 illustrates an example of a mark arrangement of the 2 mark scheme in subpixels divided into upper portions and lower portions according to a sixth embodiment of the present invention. Referring to FIG. 15, when the marks are formed at three points, such as the upper side, the center, and the lower side, of each of the left side and the right side, the marks may be arranged in each subpixel in any one type among types 0 to 8. According to the mark arrangement in the 2 mark type of FIG. 15, the left side is symmetric to the right side, so that the pattern noise is not generated when the display panel is viewed from the left side and the right side. However, in FIG. 15, the upper side is not symmetric to the lower side, so that a brightness difference may be present between the upper side and the lower side.

In order to decrease the brightness difference between the upper side and the lower side, according to a seventh embodiment of the present invention, a modified 2 mark type is provided, in which the two symmetric marks are included in the left side and the right side of the lower portion in such a manner that the marks positioned at the upper side and the lower side of the lower portion are formed to be smaller than the mark positioned at the center.

FIG. 16 illustrates an example of a mark arrangement of a modified 2 mark type in subpixels divided into upper portions and lower portions according to the seventh embodiment of the present invention. Referring to FIG. 16, when the marks are positioned at the upper sides within the lower portion like reference numeral u1, the marks are formed to have a smaller size than those of the marks positioned at the center when the marks are positioned at the lower side within the power portion in the manner of reference numeral dl. This decreases the brightness difference due to the mark between the upper side and the lower side, so that the pattern noise may be decreased.

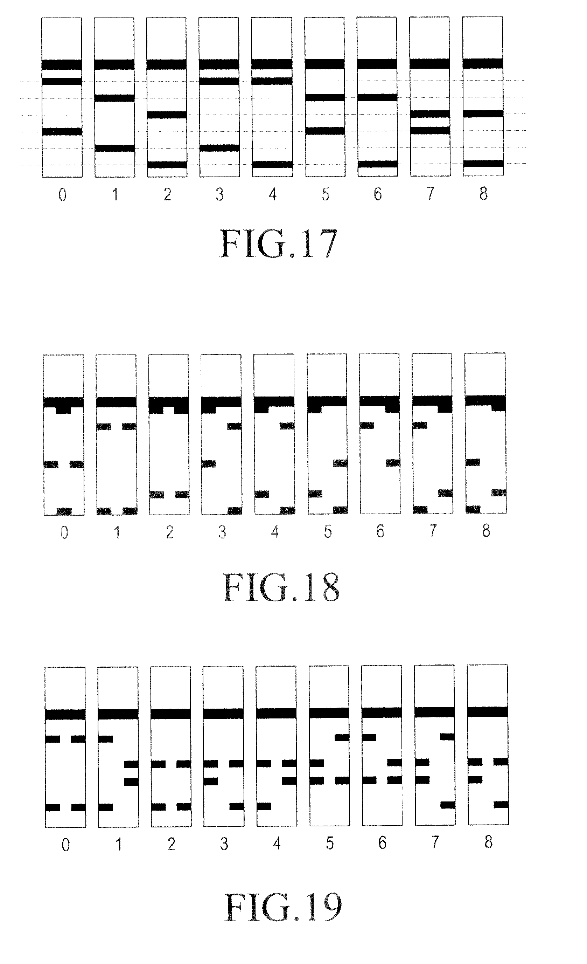

FIG. 17 illustrates an example of a mark arrangement of a 2 line type in subpixels divided into upper portions and lower portions according to the eighth embodiment of the present invention. Referring to FIG. 17, 6 horizontal lines may be included in the lower portion within the subpixel. In a case of the line type, the mark is not included in either side between the left side and the right side, but the mark is connected in a line from the left side to the right side, so that there is no brightness difference between the left side and the right side. In the eighth embodiment of the present invention, in order to decrease the brightness difference between the upper side and the lower side, the two lines are included in the lower portion within one subpixel.

FIG. 18 illustrates an example of a mark arrangement of the 4 mark type in subpixels divided into upper portions and lower portions according to the ninth embodiment of the present invention. Referring to FIG. 18, two symmetric marks are included in the left side and the right side within the lower portion, and two symmetric marks are included in the upper side and the lower side within the lower portion, so that the four marks are included in the upper, lower, left, and right sides within the lower portion, respectively. According to the 4 mark type in the lower portion, it is possible to decrease a brightness difference between the left side and the right side, and to also decrease a brightness difference between the upper side and the lower side.

FIG. 19 illustrates an example of a mark arrangement of a modified 4 mark type in lower portions in subpixels divided into upper portions and lower portions according to a tenth embodiment of the present invention. Referring to FIG. 19, similar to FIG 18, two symmetric marks are included in the left side and the right side within the lower portion, and two symmetric marks are included in the upper side and the lower side within the lower portion, so that the four marks are included in the upper, lower, left, and right sides within the lower portion, respectively. In this case, in addition to the aforementioned positions of the marks, when the positions are symmetric to each other in the upward, downward, left, and right directions, the position of the mark may be modified in any degree.

Accordingly, the present invention adjusts the positions and the number of marks so that the brightness of the light of the subpixels is not different even though the user views the display panel in any direction among the upward, downward, left, and right directions, thereby preventing the image quality from deteriorating due to the generation of the pattern noise.

While the present invention has been shown and described with reference to certain embodiments thereof, various modifications may be performed without departing from the spirit and scope of the present invention. For example, the several positions of the marks are described as examples, but when the positions of the respective marks corresponding to the 2 marks or 4 marks are the positions of the marks at which the pattern noise is decreased when the display panel is viewed in the upward, downward, left, and right directions, the positions of the marks may be modified and arranged. Accordingly, the scope of the present invention is not defined by the aforementioned embodimentS, but is defined by the appended claims and their equivalents.

## Claims

1. A display device including a pattern, comprising:
a plurality of color filters corresponding to one or more subpixels forming pixels of the display device; and
a black matrix formed between the plurality of color filters,
wherein the one or more subpixels include one or more marks representing absolute positions of the respective pixels of the display device, and each of the subpixels includes symmetric marks at a left side and a right side of the subpixel.

2. The display device of claim 1, wherein the symmetric marks at the left side and the right side within the subpixel are 2 marks.

3. The display device of claim 1, wherein each of the subpixels further includes symmetric marks at an upper side and a lower side of the subpixel.

4. The display device of claim 3, wherein the corresponding marks at the left side and the right side of the subpixel and the symmetric marks at the upper side and the lower side of the subpixel are 4 marks.

5. The display device of claim 1, wherein each of the subpixels is divided into an upper portion and a lower portion.

6. The display device of claim 5, wherein each of the subpixels includes symmetric marks at a left side and a right side of the lower portion.

7. The display device of claim 6, wherein each of the subpixels further includes symmetric marks at an upper side and a lower side of the lower portion.

8. A display device including a pattern, comprising:
a plurality of color filters corresponding to one or more subpixels forming pixels of the display device; and
a black matrix formed between the plurality of color filters,
wherein the one or more subpixels include one or more lines representing absolute positions of the respective pixels of the display device, and each of the subpixels includes symmetric lines at an upper side and a lower side of the subpixel.
